(19)

Europäisches
Patentamt
European
Patent Office
Office européen
des brevets

(11) **EP 2 290 210 B1**

(12) **EUROPEAN PATENT SPECIFICATION**

(45) Date of publication and mention
of the grant of the patent:
**12.09.2012 Bulletin 2012/37**

(51) Int Cl.:
*F02D 21/08* (2006.01)      *F02D 41/00* (2006.01)
*F02M 25/07* (2006.01)

(21) Application number: **10171646.2**

(22) Date of filing: **02.08.2010**

(54) **Fuel supply control system for internal combustion engine**

System zur Steuerung der Kraftstoffzufuhr für einen Verbrennungsmotor

Système de contrôle d'alimentation en carburant pour moteur à combustion interne

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **01.09.2009 JP 2009201483**

(43) Date of publication of application:
**02.03.2011 Bulletin 2011/09**

(73) Proprietor: **Honda Motor Co., Ltd.
Tokyo 107-8556 (JP)**

(72) Inventors:
• **Odajima, Akira
Saitama 351-0193 (JP)**

• **Kurokawa, Yoshiki
Saitama 351-0193 (JP)**
• **Andou, Hirokazu
Saitama 351-0193 (JP)**
• **Shiromoto, Takao
Saitama 351-0193 (JP)**

(74) Representative: **Prechtel, Jörg et al
Weickmann & Weickmann
Patentanwälte
Postfach 86 08 20
81635 München (DE)**

(56) References cited:
**EP-A2- 0 620 364      EP-A2- 0 892 166
EP-A2- 1 460 251**

Printed by Jouve, 75001 PARIS (FR)

## Description

BACKGROUND OF THE INVENTION

Field of the Invention

The present invention relates to a fuel supply control system for an internal combustion engine, for controlling the amount of fuel supplied to a combustion chamber, and particularly to a fuel supply control system that limits the amount of fuel supply in order to reduce the amount of generation of smoke.

Description of the Related Art

Conventionally, a fuel supply control system for an internal combustion engine of this kind has been proposed in Japanese Patent No. 4135539. This engine includes a supercharger and an EGR device, and the supercharger comprises a turbine disposed in an exhaust passage, a compressor disposed in an intake passage for rotation in unison with the turbine, and so forth. The EGR device is for recirculating part of exhaust gases to the intake passage, and comprises an EGR passage connected to a portion of the exhaust passage downstream of the turbine and a portion of the intake passage upstream of the compressor, and an EGR control valve disposed in the EGR passage.

In this fuel supply control system, a demanded fuel injection amount is calculated according to a rotational speed and a torque of the engine, and when the demanded fuel injection amount is not more than a smoke-limit fuel injection amount, the fuel injection amount is set to the demanded fuel injection amount, whereas when the demanded fuel injection amount is more than the smoke-limit fuel injection amount, the fuel injection amount is limited to the smoke-limit fuel injection amount in order to reduce an amount of generation of smoke. The smoke-limit fuel injection amount is calculated by calculating a basic value according to an amount of fresh air detected upstream of the portion of the intake passage connected to the EGR passage and the engine speed, and adding a correction value to the calculated basic value. Further, the correction value is set to a value of 0 when the EGR operation is not executed, and is set to a value larger than 0 according to the EGR ratio and the engine speed during execution of the EGR operation.

Immediately after the EGR operation is terminated, part of exhaust gases having been recirculated remains in the intake passage. Further, in the conventional engine, since the EGR passage is connected to the portion of the intake passage upstream of the compressor, the section of the intake passage between the portion connected to the EGR passage and the combustion chamber is relatively long, so that it takes a long time for the remaining exhaust gases to completely flow from the intake passage into the combustion chamber. For this reason, during that time, a difference occurs between the amount of fresh air detected upstream of the portion connected to the EGR passage, and the amount of fresh air actually supplied to the combustion chamber. In the conventional fuel supply control system, however, when the EGR operation is interrupted, the smoke-limit fuel injection amount is merely changed in accordance with the detected amount of fresh air and the engine speed, and hence it is sometimes impossible to properly limit the fuel injection amount. In such a case, it is not possible to properly control the air-fuel ratio of a mixture supplied to the combustion chamber, which prevents a stable combustion state from being obtained, resulting in increased exhaust emissions and degraded drivability. Particularly, if the smoke-limit fuel injection amount is set to a larger value to relax the limitation of the fuel injection amount, a larger amount of fuel comes to be injected, which sometimes makes the air-fuel ratio excessively richer, and in this case, the amount of generation of smoke increases.

In EP 1 460 251 a smoke-limit fuel injection amount is calculated according to fresh air amount. The limit is corrected according to EGR ratio and engine speed, the correction value being zero when EGR is not executed.

SUMMARY OF THE INVENTION

It is an object of the present invention to provide a fuel supply control system for an internal combustion engine, which is capable of reducing the amount of generation of smoke and maintaining reduced exhaust emissions and excellent drivability by properly controlling a fuel supply amount in accordance with conditions of the EGR operation.

To attain the above object, the present invention provides a fuel supply control system for an internal combustion engine which executes an EGR operation for recirculating part of exhaust gases discharged into an exhaust passage to an intake passage, via an EGR passage connecting between a portion of the intake passage upstream of a turbocharger disposed in the intake passage and the exhaust passage, the fuel supply control system controlling an amount of fuel supplied to a combustion chamber, characterized by comprising operating condition-detecting means for detecting operating conditions of the engine, fuel supply amount-calculating means for calculating an amount of fuel supply according to the detected operating conditions of the engine, upper limit value-setting means for setting an upper limit value for limiting the calculated fuel supply amount as a smoke-reducing upper limit value in order to reduce an amount of generation of smoke, EGR interruption-determining means for determining whether or not the EGR operation is interrupted, upper limit value-correcting means for correcting the smoke-reducing upper limit value when it is determined by the EGR interruption-determining means that the EGR operation is interrupted, exhaust gas flow rate-calculating means for calculating a flow rate per unit time of exhaust gases discharged from the combustion chamber when it is determined that the EGR operation is interrupted, and correction time period-setting means for setting a correction time period over which the smoke-reducing upper limit value is corrected according to a capacity of a section of the intake passage between a portion connected to the EGR passage and the combustion chamber, and the calculated exhaust gas flow rate.

In this engine, the EGR passage connects between the portion of the intake passage upstream of the supercharger and the exhaust passage, and the EGR operation for recirculating part of exhaust gases to the intake passage is executed via the EGR passage. With the configuration of this fuel supply control system, the fuel supply amount is calculated in accordance with the detected operating conditions of the engine. Further, the smoke-reducing upper limit value is set by the upper limit value-setting means, and the fuel supply amount is limited by the set smoke-reducing upper limit value, whereby the amount of generation of smoke is reduced.

As described above, when the EGR operation is interrupted, exhaust gases remain in a section of the intake passage between the portion connected to the EGR passage and the combustion chamber through which exhaust gases are recirculated (hereinafter referred to as the "EGR recirculation section"). According to the present invention, when it is determined that the EGR operation is interrupted, the smoke-reducing upper limit value is corrected, and hence it is possible to properly set the smoke-reducing upper limit value, while taking into account the influence of the exhaust gases remaining in the EGR recirculation section after the interruption of the EGR operation. Therefore, it is possible to properly limit the fuel supply amount by using the smoke-reducing upper limit value, and as a result, it is possible to properly reduce the amount of generation of smoke.

Further, the time period required for the exhaust gases remaining in the EGR recirculation section to completely flow through the intake passage into the combustion chamber changes depending on the capacity of the EGR recirculation section and the exhaust gas flow rate. According to the present invention, the time period over which the smoke-reducing upper limit value is corrected is set in accordance with the capacity of the EGR recirculation section and the flow rate per unit time of exhaust gases discharged from the combustion chamber, and hence it is possible to terminate the correction of the smoke-reducing upper limit value in the optimal timing when the remaining exhaust gases have positively completely flowed through the intake passage. As a result, it is possible to prevent the amount of generation of smoke from increasing due to the correction time period being too short, and further, it is possible to prevent an inconvenience from being caused due to the correction time period being too long, e.g. degradation of drivability caused by incapability of securing the fuel supply amount according to a demand for acceleration. As described above, it is possible to properly limit the fuel supply amount by using the smoke-reducing upper limit value corrected during the properly set correction time period. As a result, it is possible to properly reduce the amount of generation of smoke, and maintain reduced exhaust emissions and excellent drivability.

Preferably, the fuel supply control system as further comprises rotational speed-detecting means for detecting a rotational speed of the engine, intake air pressure-acquiring means for acquiring pressure in the intake passage as an intake air pressure, and exhaust gas amount-acquiring means for acquiring an amount of exhaust gases discharged from the combustion chamber, wherein the exhaust gas flow rate-calculating means calculates the exhaust gas flow rate based on the detected rotational speed of the engine, the acquired intake air pressure, and the acquired amount of exhaust gases.

From the equation of state of gas ($PV = nRT$), the intake air pressure and the flow rate per unit time of exhaust gases discharged from the combustion chamber have a proportional relationship. According to the present invention, the exhaust gas flow rate is calculated based on not only the detected or acquired engine speed and amount of exhaust gases but also the intake air pressure, and hence it is possible to properly calculate the exhaust gas flow rate, and as a result, it is possible to optimally set the correction time period by using the calculated exhaust gas flow rate.

Preferably, the fuel supply control system further comprises exhaust gas recirculation amount-acquiring means for acquiring an amount of exhaust gas recirculation, and the upper limit value-correcting means corrects the smoke-reducing upper limit value according to the acquired amount of exhaust gas recirculation and the operating conditions of the engine.

Even when the fuel supply amount is the same, if the amount of exhaust gas recirculation is different, the air-fuel ratio varies accordingly. According to the present invention, the smoke-reducing upper limit value is corrected in accordance with the acquired amount of exhaust gas recirculation, and hence it is possible to correct the smoke-reducing upper limit value to a proper value in which the actual amount of exhaust gas recirculation is reflected.

Preferably, the fuel supply control system further comprises measuring means for measuring an execution time period over which the EGR operation is executed, and correction-delaying means for starting correction of the smoke-reducing upper limit value by the upper limit value-correcting means, in timing delayed by a delay time period corresponding to a difference between the correction time period and the execution time period from a time point at which it is determined that the EGR operation is interrupted, in a case where the correction time period is longer than the execution time period which has just been measured on the EGR operation.

If the time period over which the EGR operation has been executed is relatively long, immediately after the EGR operation is interrupted after the execution time period, exhaust gases remain throughout the whole EGR recirculation section. However, if the time period over which the EGR operation has been executed is short, exhaust gases do not fully flow into the whole EGR recirculation section, but fresh air sometimes remains mainly in a portion of the EGR recirculation section closer to the combustion chamber. The proportion of the amount of the fresh air in this case is larger as the time period over which the EGR operation has been executed is shorter. According to the present invention, when the correction time period is longer than the execution time period over which the EGR operation has been just executed, the correction of the smoke-reducing upper limit value is started in timing delayed by a delay time period corresponding to the difference between the correction time period and the execution time period from a time point when it is determined that the EGR operation is interrupted. Therefore, it is possible to start the correction of the smoke-reducing upper limit value in the optimal timing when the fresh air remaining in part of the EGR recirculation section closer to the combustion chamber has completely flowed through the intake passage. As a result, it is possible to prevent the fuel supply amount from being unnecessarily limited until the start of the correction, whereby it is possible to further improve drivability, including being capable of meeting a demand for acceleration.

More preferably, the fuel supply control system further comprises correction time period-reducing means for reducing the correction time period according to the delay time period, in a case where the start of the correction of the smoke-reducing upper limit value is delayed by the correction-delaying means.

When the start of the correction time period is delayed, the correction time period is sometimes set long if it is merely set in accordance with the capacity of the EGR recirculation section and the exhaust gas flow rate per unit time, and in such a case, the upper limit value continues to be limited even though the remaining exhaust gases have completely flowed through the intake passage. According to the present invention, when the start of the correction of the smoke-reducing upper limit value is delayed, the correction time period is reduced depending on the delay time period, and hence it is possible to terminate the correction of the smoke-reducing upper limit value in the optimal timing when the remaining exhaust gases have positively completely flowed through the intake passage. As a result, it is possible to prevent the fuel supply amount from continuing to be unnecessarily limited, whereby it is possible to further improve drivability, including being capable of meeting a demand for acceleration.

The above and other objects, features, and advantages of the present invention will become more apparent from the following detailed description taken in conjunction with the accompanying drawings.

BRIEF DESCRIPTION OF THE DRAWINGS

FIG. 1 is a schematic diagram of an internal combustion engine to which is applied the present invention;
FIG. 2 is a schematic block diagram of a fuel supply control system;
FIG. 3 is a flowchart showing a main flow of a fuel injection control process;
FIG. 4 is a flowchart showing a subroutine for a process for limiting a fuel injection amount;
FIG. 5 is a flowchart showing a subroutine for a process for calculating an upper limit value; and
FIG. 6 is a flowchart showing a subroutine for a process for setting a correction condition.

DETAILED DESCRIPTION OF PREFERRED EMBODIMENTS

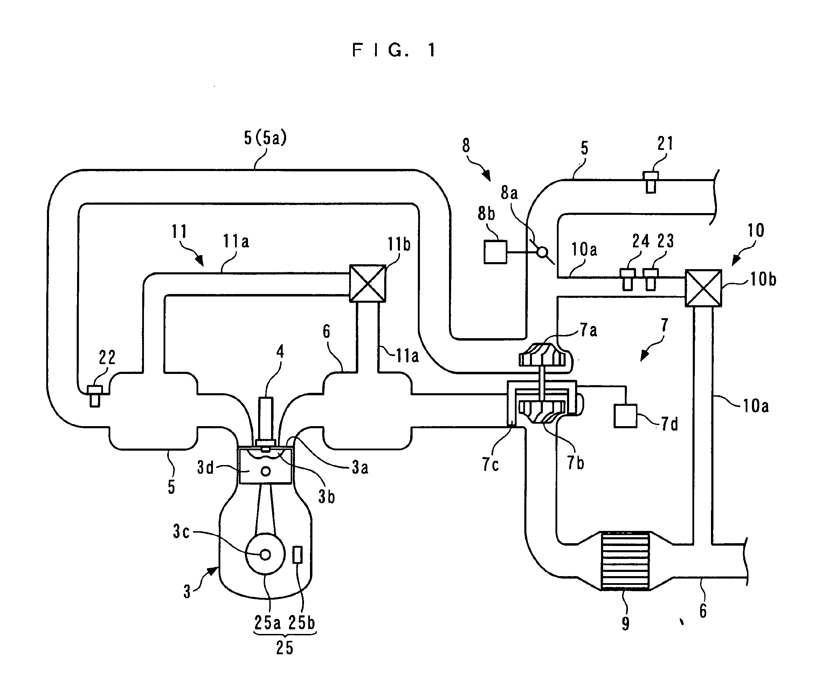

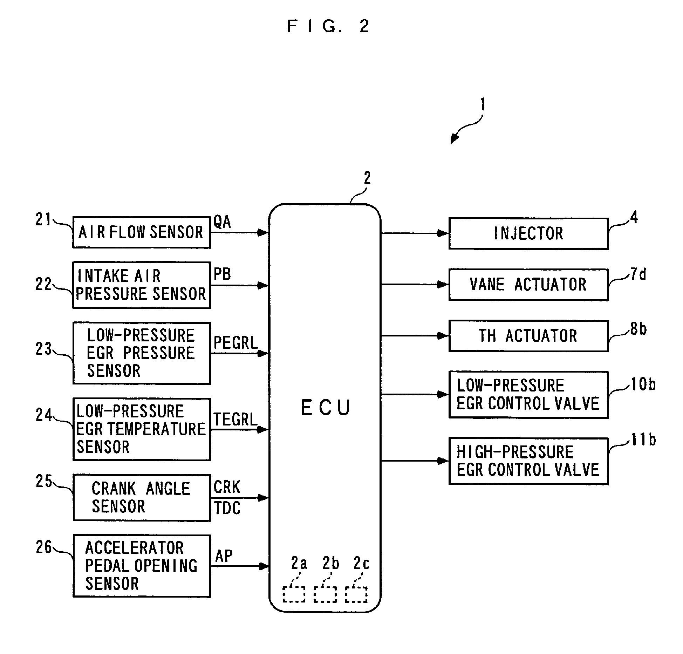

The invention will now be described in detail with reference to drawings showing a preferred embodiment thereof. As shown in FIG. 2, a fuel supply control system 1 according to the present embodiment includes an ECU 2 configured to perform various controlling processes described hereinafter, and is applied to an internal combustion engine (hereinafter referred to as "the engine") 3 shown in FIG. 1. The engine 3 is e.g. an in-line four-cylinder diesel engine installed on a vehicle (not shown), and includes a turbocharger 7, a low-pressure EGR device 10, a high-pressure EGR device 11, and so forth.

A cylinder head 3a of the engine 3 has a fuel injection valve (hereinafter referred to as "the injector") 4 mounted therethrough such that it faces a combustion chamber 3b. The valve-opening time period and the valve-opening timing of the injector 4 are controlled by a drive signal from the ECU 2, whereby a fuel injection amount QINJ and fuel injection timing TINJ are controlled.

The turbocharger 7 comprises a compressor blade 7a disposed in an intake passage 5, a turbine blade 7b disposed in an exhaust passage 6, for rotation in unison with the compressor blade 7a, a plurality of variable vanes 7c (only two of which are shown), and a vane actuator 7d for actuating the variable vanes 7c.

In the turbocharger 7, as the turbine blade 7b is driven for rotation by exhaust gases flowing through the exhaust passage 6, the compressor blade 7a integrally formed with the turbine blade 7b rotates simultaneously with the rotation of the turbine blade 7b, whereby a supercharging operation for supercharging intake air is carried out.

The variable vanes 7c are pivotally mounted on a wall of a housing, not shown, which accommodates the turbine blade 7b, and are mechanically connected to the vane actuator 7d. The degree of opening of the variable vanes 7c is controlled by the ECU 2 via the vane actuator 7d. This varies the amount of exhaust gases blown to the turbine blade 7b, and in accordance with this variation, the rotational speed of the turbine blade 7b and the compressor blade 7a is changed, whereby boost pressure is controlled.

An air flow sensor 21, a throttle valve mechanism 8, and an intake air pressure sensor 22 are arranged in the intake passage 5 of the engine 3 from upstream to downstream in the mentioned order. The air flow sensor 21 is disposed at a location upstream of the compressor blade 7a, and detects an amount QA of fresh air introduced into the engine 3 to deliver a signal indicative of the sensed fresh air amount QA to the ECU 2. The intake air pressure sensor 22 is disposed in the intake passage 5 at a location immediately upstream of a portion of the intake passage 5 connected to a high-pressure EGR passage 11a, referred to hereinafter, of the high-pressure EGR device 11, and detects a pressure PB in the intake passage 5 (hereinafter referred to as "the intake air pressure") to deliver a signal indicative of the sensed intake air pressure PB to the ECU 2.

The throttle valve mechanism 8 comprises a throttle valve 8a and a TH actuator 8b that actuates the throttle valve 8a. The throttle valve 8a is pivotally disposed in the intake passage 5 at a location upstream of the compressor blade 7a and at the same time immediately upstream of a portion of the intake passage 5 connected to a low-pressure EGR passage 10a, referred to hereinafter, of the low-pressure EGR device 10. The TH actuator 8b is a combination of a motor (not shown) and a reduction gear mechanism (not shown). The degree of opening of the throttle valve 8a is controlled via the TH actuator 8b in accordance with a control input from the ECU 2, whereby the amount of fresh air passing through the throttle valve 8a is controlled.

A DPF (Diesel Particulate Filter) 9 is disposed in the exhaust passage 6 at a location downstream of the turbine blade 7b. The DPF 9 collects particulates, such as soot, from exhaust gases to thereby purify the exhaust gases.

Both of the above-mentioned low-pressure EGR device 10 and high-pressure EGR device 11 are provided for executing an EGR operation for recirculating part of exhaust gases discharged from the engine 3 into the exhaust passage 6, to the intake passage 5.

The low-pressure EGR device 10 comprises the low-pressure EGR passage 10a connected to a portion of the intake passage 5 upstream of the compressor blade 7a and a portion of the exhaust passage 6 downstream of the turbine blade 7b, and a low-pressure EGR control valve 10b for opening and closing the low-pressure EGR passage 10a.

The low-pressure EGR control valve 10b is formed by an electromagnetic valve the valve lift of which is continuously changed, and is electrically connected to the ECU 2. The degree of opening of the low-pressure EGR control valve 10b is controlled in accordance with a control input from the ECU 2, whereby the amount of exhaust gas recirculation via the low-pressure EGR passage 10a (hereinafter referred to as "the low-pressure EGR amount") is controlled.

The low-pressure EGR passage 10a has a low-pressure EGR pressure sensor 23 and a low-pressure EGR temperature sensor 24 inserted therein. The low-pressure EGR pressure sensor 23 detects a pressure in the low-pressure EGR passage 10a (hereinafter referred to as "the low-pressure EGR pressure") PEGRL, and delivers a signal indicative of the sensed low-pressure EGR pressure PEGRL to the ECU 2. The low-pressure EGR temperature sensor 24 detects a temperature in the low-pressure EGR passage 10a (hereinafter referred to as "the low-pressure EGR temperature") TEGRL, and delivers a signal indicative of the sensed low-pressure EGR temperature TEGRL to the ECU 2.

The high-pressure EGR device 11 comprises the high-pressure EGR passage 11a connected to the portion of the intake passage 5 downstream of the compressor blade 7a and a portion of the exhaust passage 6 upstream of the turbine blade 7b, and a high-pressure EGR control valve 11b for opening and closing the high-pressure EGR passage 11a.

The high-pressure EGR control valve 11b is formed by an electromagnetic valve the valve lift of which is continuously changed, and is electrically connected to the ECU 2. The degree of opening of the high-pressure EGR control valve 11b is controlled in accordance with a control input from the ECU 2, whereby the amount of exhaust gas recirculation via the high-pressure EGR passage 11a (hereinafter referred to as "the high-pressure EGR amount") is controlled.

Further, the engine 3 is provided with a crank angle sensor 25. The crank angle sensor 25 comprises a magnet rotor 25a and an MRE (magnetic resistance element) pickup 25b, and delivers a CRK signal and a TDC signal, which are both pulse signals, to the ECU 2 in accordance with rotation of a crankshaft 3c.

Each pulse of the CRK signal is delivered whenever the crankshaft 3c rotates through a predetermined angle (e.g. 1° ) . The ECU 2 calculates a rotational speed of the engine 3 (hereinafter referred to as "the engine speed") NE based on the CRK signal. The TDC signal indicates that a piston 3d in one of the cylinders is in a predetermined crank angle position slightly before the TDC position at the start of the intake stroke, and each pulse thereof is delivered whenever the crankshaft 3c rotates through 180° when the engine 3 is of a four-cylinder type as in the present embodiment.

An accelerator pedal opening sensor 26 detects a stepped-on amount of an accelerator pedal (not shown) of the vehicle (hereinafter referred to as "the accelerator pedal opening") AP and delivers a signal indicative of the sensed accelerator pedal opening AP to the ECU 2.

The ECU 2 is implemented by a microcomputer comprising a CPU, a RAM, a ROM and an I/O interface (none of which are specifically shown). Further, the ECU 2 includes first to third timers 2a to 2c. The first timer 2a is a count-up timer, and the second and third timers 2b and 2c are each a count-down timer. The ECU 2 determines operating conditions of the engine 3 based on the detection signals from the aforementioned sensors 21 to 26, and depending on the determined operating conditions of the engine 3, performs an EGR control process including control of the EGR operation and control of the low-pressure EGR amount using the low-pressure EGR device 10 and the high-pressure EGR amount using the high-pressure EGR device 11. Whether or not to execute the EGR operation is determined by searching a predetermined map (not shown) according to the engine speed NE and a demanded torque PMCMD. It should be noted that the demanded torque PMCMD is calculated by searching a predetermined map (not shown) according to the engine speed NE and the accelerator pedal opening AP.

Further, the ECU 2 executes various control processes including a fuel injection control process for controlling the fuel injection amount QINJ and the fuel injection timing TINJ.

In the present embodiment, the ECU 2 corresponds to operating condition-detecting means, fuel supply amount-calculating means, upper limit value-setting means, EGR interruption-determining means, upper limit value-correcting means, exhaust gas flow rate-calculating means, correction time period-setting means, rotational speed-detecting means, exhaust gas amount-acquiring means, exhaust gas recirculation amount-acquiring means, correction delay means, and correction time period-reducing means.

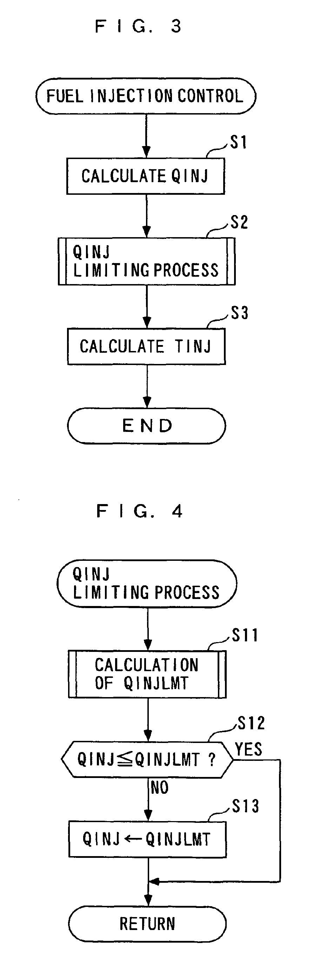

FIG. 3 is a flowchart showing the above-mentioned fuel injection control process. The present process is executed in synchronism with generation of the TDC signal pulse. In the present process, first, in a step 1 (shown as S1 in abbreviated form in FIG. 3; the following steps are also shown in abbreviated form), the fuel injection amount QINJ is calculated by searching a predetermined map (not shown) according to the engine speed NE and the demanded torque PMCMD.

Next, a process is carried out for limiting the calculated fuel injection amount QINJ (step 2). FIG. 4 is a flowchart showing a subroutine for the process for limiting the fuel injection amount QINJ. In the present process, first, in a step 11, an upper limit value QINJLMT is calculated. The upper limit value QINJLMT is for limiting the fuel injection amount QINJ in order to reduce the amount of generation of smoke. A process for calculating the upper limit value QINJLMT will be described hereinafter.

Next, it is determined whether or not the fuel injection amount QINJ is not more than the upper limit value QINJLMT (step 12). If the answer to this question is affirmative (YES), the present process is immediately terminated, whereas if the answer to the question of the step 12 is negative (NO), the fuel injection amount QINJ is set to the upper limit value QINJLMT (step 13) , followed by terminating the present process.

Referring again to FIG. 3, in a step 3 following the step 2, the fuel injection timing TINJ is calculated by searching a predetermined map (not shown) according to the engine speed NE and the demanded torque PMCMD, followed by terminating the present process. The valve-opening time period and the valve-opening timing of the injector 4 are controlled based on the fuel injection amount QINJ and the fuel injection timing TINJ, calculated as above, whereby the fuel injection is performed.

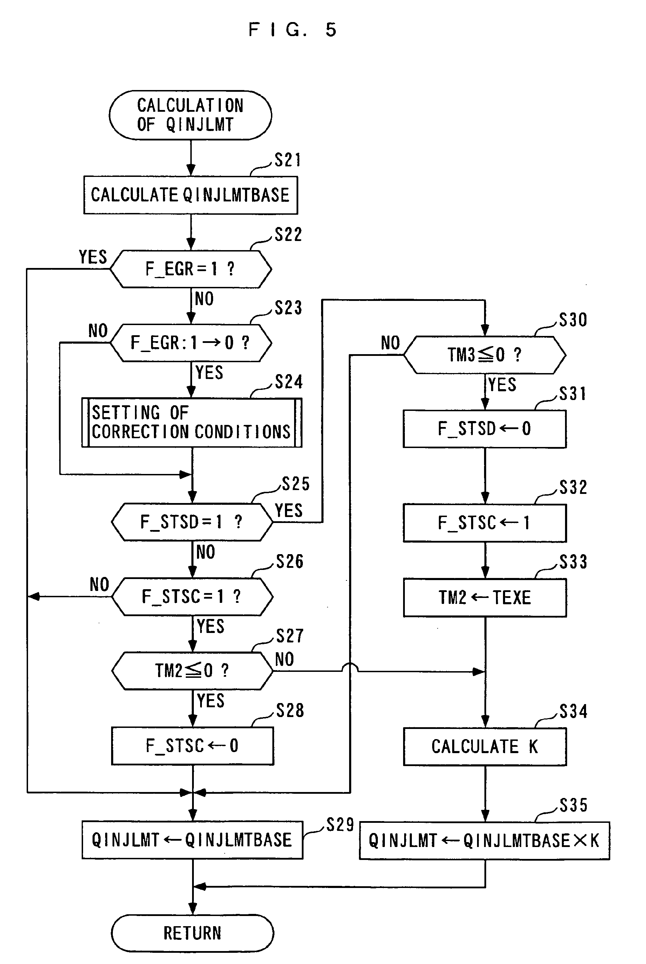

FIG. 5 is a flowchart showing a subroutine for the process for calculating the above-mentioned upper limit value QINJLMT. In the present process, first, in a step 21, a basic value QINJLMTBASE of the upper limit value is calculated by searching a predetermined map (not shown) according to the engine speed NE and the demanded torque PMCMD.

Next, it is determined whether or not a low-pressure EGR flag F_EGR is equal to 1 (step 22). The low-pressure EGR flag F_EGR is set to 1 during execution of the EGR operation by the low-pressure EGR device 10 (hereinafter referred to as "the low-pressure EGR operation"). It should be noted that the low-pressure EGR operation is interrupted when a change in the demanded torque PMCMD is large, i.e. a request to increase speed by an operator is large.

If the answer to the question of the step 22 is affirmative (YES), i.e. if it is during execution of the low-pressure EGR operation, the process proceeds to a step 29, wherein the basic value QINJLMTBASE calculated in the step 21 is set as the upper limit value QINJLMT, followed by terminating the present process.

On the other hand, if the answer to the question of the step 22 is negative (NO), it is determined whether or not the low-pressure EGR flag F_EGR has been changed from 1 to 0 between the immediately preceding loop and the present loop (step 23). If the answer to this question is affirmative (YES), i.e. if it is immediately after the interruption of the low-pressure EGR operation, correction conditions for correcting the upper limit value QINJLMT are set (step 24) .

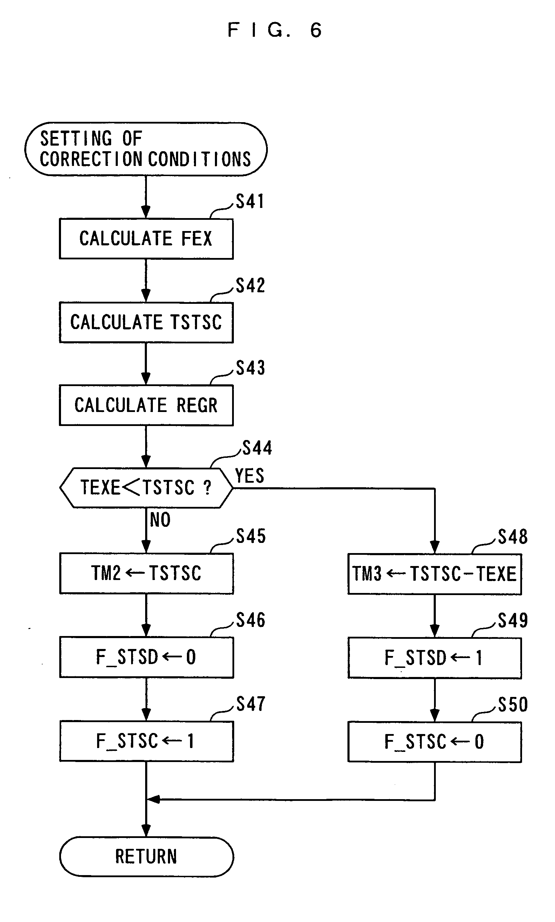

FIG. 6 is a flowchart showing a subroutine for a process for setting the correction conditions. In the present process, first, in a step 41, an exhaust gas flow rate FEX per unit time of exhaust gases discharged from the combustion chamber 3b is calculated using the engine speed NE and the intake air pressure PB by the following equation (1):

$$FEX = QEX \times [(60/NE) \times 2] \times (PB/PN) \quad \cdots (1)$$

In this equation, QEX represents an amount of exhaust gases discharged from the combustion chamber 3b under a reference condition, and is calculated by searching a predetermined map (not shown) according to the engine speed NE and the demanded torque PMCMD. Further, PN represents an intake air pressure under the reference condition. QEX x [(60/NE) x 2] of the right side of the equation (1) represents the exhaust gas flow rate per unit time under the reference condition. Further, since the intake air pressure and the exhaust gas flow rate have a proportional relationship, it is possible to properly calculate the exhaust gas flow rate FEX according to the actual intake air pressure PB by multiplying the exhaust gas flow rate under the reference condition by (PB/PN).

Next, a correction time period TSTSC in which the correction of the upper limit value QINJLMT is executed is calculated using the calculated exhaust gas flow rate FEX by the following equation (2) (step 42):

$$TSTSC = CAPIN/FEX \qquad \cdots (2)$$

In this equation, CAPIN represents a capacity of a section 5a of the intake passage 5 between the portion connected to the low-pressure EGR passage 10a and the combustion chamber 3b (hereinafter referred to as "the low-pressure EGR recirculation section"). As is clear from the equation (2), the correction time period TSTSC corresponds to a time period required for the exhaust gases remaining in the low-pressure EGR recirculation section 5a at the time of interruption of the low-pressure EGR operation to completely flow through the intake passage into the combustion chamber 3b after the interruption of the low-pressure EGR operation.

Next, an EGR ratio REGR is calculated using the fresh air amount QA and the low-pressure EGR amount, represented by QEGRL, by the following equation (3) (step 43):

$$REGR = QEGRL/(QA + QEGRL) \qquad \cdots (3)$$

As is clear from the equation (3), the EGR ratio REGR is a ratio of the low-pressure EGR amount QEGRL with respect to a total amount of gases, which is a sum of the fresh air amount QA and the low-pressure EGR amount QEGRL. It should be noted that the low-pressure EGR amount QEGRL is calculated based on the equation of state of gas, using the low-pressure EGR pressure PEGRL and the low-pressure EGR temperature TEGRL detected by the low-pressure EGR pressure sensor 23 and the low-pressure EGR temperature sensor 24, respectively. Further, the length of part of the intake passage 5 extending from the portion thereof connected to the high-pressure EGR passage 11a to the combustion chamber 3b is relatively small, and hence the exhaust gases recirculated via the high-pressure EGR passage 11a flow into the combustion chamber 3b in a short time. For this reason, the high-pressure EGR amount is not taken into account in the calculation of the EGR ratio REGR by the equation (3).

Next, it is determined whether or not an execution time period TEXE is smaller than the correction time period TSTSC (step 44). The execution time period TEXE is a time period over which the low-pressure EGR operation has been executed immediately before the current interruption of the low-pressure EGR operation, and is measured by the first timer 2a.

If the answer to this question is negative (NO), i.e. if the execution time period TEXE over which the low-pressure EGR operation has been executed is not shorter than the correction time period TSTSC during which the upper limit value QINJLMT is to be corrected, the correction time period TSTSC is set as a second timer value TM2 (step 45). Next, a correction delay flag F_STSD is set to 0 (step 46).

Next, to indicate execution of the correction of the upper limit value QINJLMT, an upper limit value correction flag F_STSC is set to 1 (step 47), followed by terminating the present process.

On the other hand, if the answer to the question of the step 44 is affirmative (YES), i.e. if the execution time period TEXE over which the low-pressure EGR operation has been executed is shorter than the correction time period TSTSC during which the upper limit value QINJLMT is to be corrected, a value obtained by subtracting the execution time period TEXE from the correction time period TSTSC is set as a third timer value TM3 (step 48).

Then, to indicate delay of the start of the correction of the upper limit value QINJLMT, the correction delay flag F_STSD is set to 1 (step 49), and at the same time the upper limit value correction flag F_STSC is set to 0 (step 50), followed by terminating the present process.

Referring again to FIG. 5, after the step 24 is executed, the process proceeds to a step 25. Further, if the answer to the question of the step 23 is negative (NO), i.e. if the present loop is a second or following loop after the interruption of the low-pressure EGR operation, the process skips over the step 24 to the step 25.

In the step 25, it is determined whether or not the correction delay flag F_STSD is equal to 1. If the answer to this question is negative (NO), it is determined whether or not the upper limit value correction flag F_STSC is equal to 1 (step 26). If the answer to this question is affirmative (YES), it is determined whether or not the second timer value TM2 set in the step 45 is not more than 0 (step 27).

If the answer to this question is negative (NO), i.e. if the correction time period TSTSC has not elapsed after the interruption of the low-pressure EGR operation, the upper limit value QINJLMT is corrected in steps 34 and 35. First, in the step 34, a correction coefficient K is calculated by searching a predetermined map (not shown) according to the engine speed NE and the EGR ratio REGR calculated in the step 43. In this map, the correction coefficient K is larger than 0 and at the same time smaller than 1 (0 < K < 1), and is set to a smaller value as the EGR ratio REGR is larger.

Next, the upper limit value QINJLMT is calculated by multiplying the basic value QINJLMTBASE by the calculated correction coefficient K (step 35), followed by terminating the present process.

On the other hand, if the answer to the question of the step 27 is affirmative (YES), i.e. if the correction time period TSTSC has elapsed after the interruption of the low-pressure EGR operation, it is judged that the exhaust gases remaining in the low-pressure EGR recirculation section 5a have completely flowed into the combustion chamber 3b, and the correction of the upper limit value QINJLMT should be terminated, and to indicate this fact, the upper limit value correction flag F_STSC is set to 0 (step 28). Next, the process proceeds to the step 29, wherein the upper limit value QINJLMT is set to the basic value QINJLMTBASE, followed by terminating the present process. Further, by executing the step 28, the answer to the question of the step 26 becomes negative (NO) after that, and in that case, the process directly proceeds to the step 29, followed by terminating the present process.

Further, if the answer to the question of the step 25 is affirmative (YES), i.e. if it is determined that the correction of the upper limit value QINJLMT should be delayed, it is determined whether or not the third timer value TM3 set in the step 48 is not more than 0 (step 30). If the answer to this question is negative (NO), it is judged that the correction of the upper limit value QINJLMT is not to be performed, so that the step 29 is executed, followed by terminating the present process.

On the other hand, if the answer to the question of the step 30 is affirmative (YES), it is judged that the fresh air remaining in part of the low-pressure EGR recirculation section 5a, closer to the combustion chamber 3b, has completely flowed into the combustion chamber 3b, so that it is judged that the delay of the correction of the upper limit value QINJLMT should be terminated and the correction should be started. To indicate this fact, the correction delay flag F_STSD is set to 0 (step 31), and at the same time the upper limit value correction flag F_STSC is set to 1 (step 32).

Next, the second timer value TM2 is set to the execution time period TEXE (step 33). Further, the process proceeds to the steps 34 et seq., whereby the upper limit value QINJLMT is corrected by the correction coefficient K calculated in the step 34 (step 35), followed by terminating the present process.

By executing the steps 31 and 32 as described above, the answer to the question of the step 25 becomes negative (NO), and at the same time the answer to the question of the step 26 becomes affirmative (YES), so that the steps 27 et seq. are executed. Specifically, until the second timer value TM2 set in the step 33 becomes equal to 0, i.e. until the execution time period TEXE elapses after the start of the correction of the upper limit value QINJLMT, the correction of the upper limit value QINJLMT is executed (step 34 and 35), and upon the lapse of the execution time period TEXE, the correction of the upper limit value QINJLMT is terminated (step 29).

As described above, according to the present embodiment, when the low-pressure EGR operation is interrupted, the upper limit value QINJLMT is corrected to a smaller value by multiplying the basic value QINJLMTBASE by the correction coefficient K. As a result, by limiting the fuel injection amount QINJ by using the corrected upper limit value QINJLMT, it is possible to prevent the air-fuel ratio of the mixture supplied to the combustion chamber 3b from becoming excessively richer, while taking into account the influence of the exhaust gases remaining in the low-pressure EGR recirculation section 5a, whereby it is possible to properly reduce the amount of generation of smoke.

Further, since as the EGR ratio REGR is larger, the correction coefficient K is set to a smaller value, it is possible to correct the upper limit value QINJLMT to a proper value in which the actual amount of exhaust gas recirculation is reflected.

Further, since the correction time period TSTSC over which the upper limit value QINJLMT is to be corrected is set by using the capacity CAPIN of the low-pressure EGR recirculation section 5a and the exhaust gas flow rate FEX, it is possible to terminate the correction of the upper limit value QINJLMT in the optimal timing when the remaining exhaust gases have completely flowed through. As a result, it is possible to prevent the amount of generation of smoke from increasing due to the correction time period TSTSC being too short, and further, it is possible to prevent an inconvenience from being caused due to the correction time period TSTSC being too long, e.g. degradation of drivability caused by incapability of securing the fuel supply amount QINJ according to a demand for acceleration. As described above, it is possible to properly limit the fuel supply amount QINJ by using the upper limit value QINJLMT corrected during the properly set correction time period TSTSC.

Further, since the exhaust gas flow rate FEX is calculated by using not only the engine speed NE and the amount of exhaust gases QEX but also the intake air pressure PB, it is possible to properly calculate the exhaust gas flow rate FEX, and as a result, it is possible to optimally set the correction time period TSTSC by using the calculated exhaust gas flow rate FEX.

Further, when the correction time period TSTSC is longer than the execution time period TEXE, the correction of the upper limit value QINJLMT is started in timing delayed from the time point at which it is determined that the low-pressure EGR operation is interrupted, by the difference between the correction time period TSTSC and the execution time period TEXE (= TSTSC - TEXE). Therefore, it is possible to start the correction of the upper limit value QINJLMT in the optimal timing when the fresh air remaining in the low-pressure EGR recirculation section 5a has completely flowed through. As a result, it is possible to prevent the fuel injection amount QINJ from being unnecessarily limited until the start of the correction, whereby it is possible to further improve drivability, including being capable of meeting a demand for acceleration.

Further, when the start of the correction is delayed, the correction of the upper limit value QINJLMT is performed only during the execution time period TEXE, and hence it is possible to terminate the correction of the upper limit value QINJLMT in the optimal timing when the remaining exhaust gases have completely flowed through.

It should be noted that the present invention is by no means limited to the embodiment described above, but it can be practiced in various forms. For example, although in the above-described embodiment, the upper limit value is corrected by multiplying the basic value by the correction coefficient, the correction may be performed by any other suitable method. For example, the upper limit value may be corrected by adding a correction value calculated based on the EGR ratio or the like to the basic value.

Further, although in the above-described embodiment, the delay time period for delaying the correction of the upper limit value is set to a value equal to the difference between the correction time period TSTSC and the execution time period TEXE, this is not limitative, but for example, if reliable reduction of the amount of generation of smoke is given a higher priority, the delay time period may be set to a value on the safe side, which is smaller than the above-mentioned difference, whereby the start of the correction of the upper limit value may be made earlier in timing.

Further, although in the above-described embodiment, the intake air pressure is detected directly by the intake air pressure sensor 22, this is not limitative, but the intake air pressure may be estimated by using a parameter which has a close relationship with the intake air pressure. Further, although in the above-described embodiment, the low-pressure EGR amount is estimated by using the low-pressure EGR pressure PEGRL and the low-pressure EGR temperature TEGRL, this is not limitative, but the low-pressure EGR amount may be detected directly by a sensor provided in the low-pressure EGR passage.

Further, although the engine 3 of the above-described embodiment is of a direct injection type which directly injects fuel into the combustion chamber 3b, the engine 3 may be of a port injection type which injects fuel into the intake passage.

Further, although in the above-described embodiment, the supercharger is the turbocharger 7 comprising the compressor blade 7a disposed in the intake passage 5 and the turbine blade 7b disposed in the exhaust passage 6, this is not limitative, but the supercharger may be one that has no turbine disposed in the exhaust passage.

Further, although in the above-described embodiment, the present invention is applied to a diesel engine installed on a vehicle, by way of example, this is not limitative, but the present invention can be applied not only to the diesel engine but also to various types of engines, such as a gasoline engine. Further, the present invention can also be applied to engines other than engines for vehicles, including engines for ship propulsion machines, such as an outboard motor having a vertically-disposed crankshaft.

A fuel supply control system for an internal combustion engine, which is capable of reducing the amount of generation of smoke and maintaining reduced exhaust emissions and excellent drivability, by properly controlling a fuel supply amount in accordance with conditions of the EGR operation. The fuel supply control system calculates a fuel supply amount according to detected operating conditions of the engine. To reduce the amount of generation of smoke, an upper limit value for limiting the calculated fuel supply amount is set as a smoke-reducing upper limit value. Then, when it is determined that the EGR operation is interrupted, a correction time period over which the smoke-reducing upper limit value is to be corrected is set according to the capacity of a section of an intake passage between a portion connected to an EGR passage and a combustion chamber and the calculated exhaust gas flow rate.

**Claims**

1.  A fuel supply control system (4) for an internal combustion engine (3) which executes an EGR operation for recirculating part of exhaust gases discharged into an exhaust passage (6) to an intake passage (5), via an EGR passage (10a) connecting between a portion of the intake passage (5) upstream of a turbocharger (7) disposed in the intake passage (5) and the exhaust passage (6), the fuel supply control system (4) controlling an amount of fuel supplied to a combustion chamber (3b),
    comprising:

    operating condition-detecting means (2) for detecting operating conditions of the engine (3);
    fuel supply amount-calculating means for calculating an amount of fuel supply (QiNJ) according to the detected operating conditions of the engine(3) ;
upper limit value-setting means for setting an upper limit value (QiNJLMT) or limiting the calculated fuel supply amount (QiNJ) as a smoke-reducing upper limit value in order to reduce an amount of generation of smoke;
EGR interruption-determining means for determining whether or not the EGR operation is interrupted;
upper limit value-correcting means for correcting the smoke-reducing upper limit value when it is determined by said EGR interruption-determining means that the EGR operation is interrupted;
exhaust gas flow rate-calculating means for calculating a flow rate (FEX) per unit time of exhaust gases discharged from the combustion chamber (3b) when it is determined that the EGR operation is interrupted; and
correction time period-setting means for setting a correction time period (TSTSC) over which the smoke-reducing upper limit value is corrected according to a capacity (CAPIN) of a section (5a) of the intake passage (5) between a portion connected to the EGR passage (10a) and the combustion chamber (3b), and the calculated exhaust gas flow rate (FEX).

2. The fuel supply control system as claimed in claim 1, further comprising:

rotational speed-detecting means for detecting a rotational speed (NE) of the engine;
intake air pressure-acquiring means for acquiring pressure in the intake passage as an intake air pressure (PB) ; and
exhaust gas amount-acquiring means for acquiring an amount of exhaust gases (QEX) discharged from the combustion chamber,
wherein said exhaust gas flow rate-calculating means calculates the exhaust gas flow rate (FEX) based on the detected rotational speed (NE) of the engine, the acquired intake air pressure (PB), and the acquired amount of exhaust gases (QEX).

3. The fuel supply control system as claimed in either claim 1 or claim 2, further comprising exhaust gas recirculation amount-acquiring means for acquiring an amount of exhaust gas recirculation (QEGRL), and
wherein said upper limit value-correcting means corrects the smoke-reducing upper limit value according to the acquired amount of exhaust gas recirculation (QEGRL) and the operating conditions of the engine.

4. The fuel supply control system as claimed in any one of claim 1 to claim 3, further comprising:

measuring means for measuring an execution time period (TEXE) over which the EGR operation is executed; and
correction-delaying means for starting correction of the smoke-reducing upper limit value by said upper limit value-correcting means, in timing delayed by a delay time period corresponding to a difference between the correction time period (TSTSC) and the execution time period (TEXE) from a time point at which it is determined that the EGR operation is interrupted, in a case where the correction time period (TSTSC) is longer than the execution time period (TEXE) which has just been measured on the EGR operation.

5. The fuel supply control system as claimed in claim 4, further comprising correction time period-reducing means for reducing the correction time period (TSTSC) according to the delay time period, in a case where the start of the correction of the smoke-reducing upper limit value is delayed by said correction-delaying means.

**Patentansprüche**

1. Kraftstoffzufuhr-Steuer-/Regelsystem (1) für einen Verbrennungsmotor (3), welcher einen EGR-Betrieb durchführt, um einen Teil von Abgasen, welche in einen Abgasdurchgang (6) abgegeben werden, zu einem Einlassdurchgang (5) zu rezirkulieren, über einen EGR-Durchgang (10a), welcher zwischen einem Abschnitt von dem Einlassdurchgang (5) stromaufwärts von einem in dem Einlassdurchgang (5) angeordneten Turbolader (7) und dem Abgasdurchgang (6) eine Verbindung herstellt, wobei das Kraftstoffzufuhr-Steuer-/Regelsystem (1) eine einem Brennraum (3b) zugeführte Kraftstoffmenge steuert/regelt, umfassend:

ein Betriebszustand-Erfassungsmittel (2) zur Erfassung von Betriebszuständen des Motors (3);
ein Kraftstoffzufuhrmenge-Berechnungsmittel zur Berechnung einer Kraftstoffzufuhrmenge (QINJ) gemäß der erfassten Betriebszustände des Motors (3);
ein oberer Grenzwert-Einstellmittel zum Einstellen eines oberen Grenzwerts (QINJLMT) zur Begrenzung der berechneten Kraftstoffzufuhrmenge (QINJ) als einen oberen Rauchreduzierungsgrenzwert, um eine Raucherzeugungsmenge zu reduzieren;

ein EGR-Unterbrechung-Bestimmungsmittel, um zu bestimmen, ob der EGR-Betrieb unterbrochen ist oder nicht;

ein oberer Grenzwert-Korrekturmittel, um den oberen Rauchreduzierungsgrenzwert zu korrigieren, wenn durch das EGR-Unterbrechung-Bestimmungsmittel bestimmt ist, dass der EGR-Betrieb unterbrochen ist;

ein Abgasströmungsrate-Berechnungsmittel zur Berechnung einer Strömungsrate (FEX) pro Zeiteinheit von Abgasen, welche von dem Brennraum (3b) abgegeben werden, wenn bestimmt ist, dass der EGR-Betrieb unterbrochen ist; und

ein Korrekturzeitperiode-Einstellmittel, um eine Korrekturzeitperiode (TSTSC) einzustellen, über welche der obere Rauchreduzierungsgrenzwert korrigiert wird, gemäß einer Kapazität (CAPIN) von einem Abschnitt (5a) von dem Einlassdurchgang (5) zwischen einem Abschnitt, welcher mit dem EGR-Durchgang (10a) verbunden ist, und dem Brennraum (3b), und der berechneten Abgasströmungsrate (FEX).

2. Kraftstoffzufuhr-Steuer-/Regelsystem nach Anspruch 1, ferner umfassend:

ein Drehzahl-Erfassungsmittel zur Erfassung einer Drehzahl (NE) des Motors;

ein Einlassluftdruck-Erlangungsmittel zur Erlangung eines Drucks in dem Einlassdurchgang als einen Einlassluftdruck (PB); und

ein Abgasmenge-Erlangungsmittel zur Erlangung einer Menge von Abgasen (QEX), welche von dem Brennraum abgegeben wird,

wobei das Abgasströmungsrate-Berechnungsmittel die Abgasströmungsrate (FEX) basierend auf der erfassten Drehzahl (NE) von dem Motor, dem erlangten Einlassluftdruck (PB) und der erlangten Menge von Abgasen (QEX) berechnet.

3. Kraftstoffzufuhr-Steuer-/Regelsystem nach Anspruch 1 oder Anspruch 2, ferner umfassend ein Abgasrezirkulationsmenge-Erlangungsmittel zur Erlangung einer Abgasrezirkulationsmenge (QEGRL), und

wobei das oberer Grenzwert-Korrekturmittel den oberen Rauchreduzierungsgrenzwert gemäß der erlangten Abgasrezirkulationsmenge (QEGRL) und den Betriebszuständen des Motors korrigiert.

4. Kraftstoffzufuhr-Steuer-/Regelsystem nach einem der Ansprüche 1 bis 3, ferner umfassend:

ein Messmittel zum Messen einer Ausführungszeitperiode (TEXE), über welche der EGR-Betrieb ausgeführt wird; und

ein Korrektur-Verzögerungsmittel, um eine Korrektur des oberen Rauchreduzierungsgrenzwerts durch das oberer Grenzwert-Korrekturmittel mit einer Zeiteinstellung zu starten, welche durch eine Verzögerungszeitperiode verzögert ist, welche einer Differenz zwischen der Korrekturzeitperiode (TSTSC) und der Ausführungszeitperiode (TEXE) entspricht von einem Zeitpunkt, an welchem es bestimmt ist, dass der EGR-Betrieb unterbrochen ist, in einem Fall, wo die Korrekturzeitperiode (TSTSC) länger als die Ausführungszeitperiode (TEXE) ist, welche gerade an dem EGR-Betrieb gemessen wurde.

5. Kraftstoffzufuhr-Steuer-/Regelsystem nach Anspruch 4, ferner umfassend ein Korrekturzeitperiode-Reduzierungsmittel zur Reduzierung der Korrekturzeitperiode (TSTSC) gemäß der Verzögerungszeitperiode, in einem Fall, wo der Start der Korrektur von dem oberen Rauchreduzierungsgrenzwert durch das Korrektur-Verzögerungsmittel verzögert ist.

## Revendications

1. Système de contrôle de l'alimentation en carburant (1) pour un moteur à combustion interne (2) qui effectue un fonctionnement RGE pour recycler une partie des gaz d'échappement déchargés dans un passage d'échappement (6) vers un passage d'admission (5), via un passage RGE (10a) connecté entre une partie du passage d'admission (5) en amont d'un turbocompresseur (7) disposé dans le passage d'admission (5) et le passage d'échappement (6), le système de contrôle de l'alimentation en carburant (1) commandant une quantité de carburant fournie à une chambre de combustion (3b), comprenant :

des moyens de détection des conditions de fonctionnement (2) pour détecter des conditions de fonctionnement du moteur (3);

des moyens de calcul de la quantité d'alimentation de carburant pour calculer une quantité d'alimentation de carburant (QINJ) en fonction des conditions de fonctionnement détectées du moteur (3);

des moyens de réglage de valeur limite supérieure pour régler une valeur limite supérieure (QINJLMT) pour limiter la quantité d'alimentation de carburant calculée (QINJ) comme valeur limite supérieure de réduction de fumées afin de réduire une quantité de production de fumées;

des moyens de détermination d'interruption de RGE pour déterminer le fonctionnement RGE est ou non interrompu;

des moyens de correction de valeur limite supérieure pour corriger la valeur limite supérieure de réduction de fumées lorsque l'on a déterminé, par lesdits moyens de détermination d'interruption de RGE, que le fonctionnement RGE est interrompu;

des moyens de calcul de débit de gaz d'échappement pour calculer un débit (FEX) par unité de temps des gaz d'échappement déchargés de la chambre de combustion (3b) lorsque l'on a déterminé que le fonctionnement RGE est interrompu; et

des moyens de réglage de période de temps de correction pour régler une période de temps de correction (TSTSC) pendant laquelle la valeur limite supérieure de réduction de fumée est corrigée en fonction d'une capacité (CAPIN) d'une section (5a) du passage d'admission (5) entre une partie connectée au passage RGE (10a) et la chambre de combustion (3b), et du débit de gaz d'échappement calculé (FEX).

2. Système de contrôle de l'alimentation en carburant selon la revendication 1, comprenant en outre:

des moyens de détection de la vitesse de rotation pour détecter une vitesse de rotation (NE) du moteur;

des moyens d'acquisition de la pression d'air d'admission pour acquérir la pression dans le passage d'admission comme une pression d'air d'admission (PB); et

des moyens d'acquisition de la quantité de gaz d'échappement pour acquérir une quantité de gaz d'échappement (QEX) déchargés de la chambre de combustion,

dans lequel lesdits moyens de calcul du débit de gaz d'échappement calculent le débit de gaz d'échappement (FEX) sur la base de la vitesse de rotation détectée (NE) du moteur, de la pression d'air d'admission acquise (PB) et de la quantité de gaz d'échappement acquise (QEX).

3. Système de contrôle de l'alimentation en carburant selon la revendication 1 ou la revendication 2, comprenant en outre des moyens d'acquisition d'une quantité de recyclage de gaz d'échappement pour acquérir une quantité de recyclage de gaz d'échappement (QEGRL), et

dans lequel lesdits moyens de correction de valeur limite supérieure corrigent la valeur limite supérieure de réduction de fumées en fonction de la quantité de recyclage de gaz d'échappement acquise (QEGRL) et des conditions de fonctionnement du moteur.

4. Système de contrôle de l'alimentation en carburant selon l'une quelconque des revendications 1 à 3, comprenant en outre:

des moyens de mesure pour mesurer une période de temps d'exécution (TEXE) pendant laquelle le fonctionnement RGE est effectué; et

des moyens de retard de correction pour commencer la correction de la valeur limite supérieure de réduction de fumées par lesdits moyens de correction de valeur limite supérieure, à un instant retardé d'une période de temps de retard correspondant à une différence entre la période de temps de correction (TSTSC) et la période de temps d'exécution (TEXE) à partir d'un instant auquel on a déterminé que le fonctionnement RGE est interrompu, dans un cas où la période de temps de correction (TSTSC) est plus longue que la période de temps d'exécution (TEXE) qui vient d'être mesurée sur le fonctionnement RGE.

5. Système de contrôle de l'alimentation en carburant selon la revendication 4, comprenant en outre des moyens de réduction de la période de temps de correction pour réduire la période de temps de correction (TSTSC) en fonction de la période de temps de retard, dans un cas où le commencement de la correction de la valeur limite supérieure de réduction de fumées est retardé par lesdits moyens de retard de correction.

EP 2 290 210 B1

F I G.  2

F I G. 3

```
  ┌─────────────────────────┐
  │ FUEL INJECTION CONTROL  │
  └─────────────────────────┘
              │
              ▼                S1
  ┌─────────────────────────┐
  │    CALCULATE QINJ       │
  └─────────────────────────┘
              │
              ▼                S2
  ┌─────────────────────────┐
  │ QINJ                    │
  │ LIMITING PROCESS        │
  └─────────────────────────┘
              │
              ▼                S3
  ┌─────────────────────────┐
  │    CALCULATE TINJ       │
  └─────────────────────────┘
              │
              ▼
  ┌─────────────────────────┐
  │         E N D           │
  └─────────────────────────┘
```

F I G. 4

```
  ┌─────────────────────────┐
  │ QINJ                    │
  │ LIMITING PROCESS        │
  └─────────────────────────┘
              │
              ▼                S11
  ┌─────────────────────────┐
  │    CALCULATION          │
  │    OF QINJLMT           │
  └─────────────────────────┘
              │
              ▼                S12
         ╱─────────────╲          YES
        ╱ QINJ≦QINJLMT ? ╲──────────┐
         ╲─────────────╱            │
              │ NO                  │
              ▼        S13          │
  ┌─────────────────────────┐       │
  │   QINJ ← QINJLMT        │       │
  └─────────────────────────┘       │
              │◄──────────────────────┘
              ▼
  ┌─────────────────────────┐
  │        RETURN           │
  └─────────────────────────┘
```

15

F I G.  5

```
                    ┌──────────────────┐
                    │   CALCULATION    │
                    │   OF QINJLMT     │
                    └──────────────────┘
                             │
                             ▼          S21
              ┌──────────────────────────────┐
              │   CALCULATE QINJLMTBASE       │
              └──────────────────────────────┘
                             │
                             ▼          S22
   YES ◄────────────< F_EGR = 1 ? >
                             │ NO
                             ▼          S23
   NO ◄──────────< F_EGR : 1 → 0 ? >                < TM3 ≦ 0 ? >  S30
                             │ YES                   NO           │ YES
                             ▼          S24                       ▼    S31
              ┌──────────────────────────┐          ┌──────────────────┐
              │    SETTING OF            │          │   F_STSD ← 0     │
              │ CORRECTION CONDITIONS    │          └──────────────────┘
              └──────────────────────────┘                    │    S32
                             │                       ┌──────────────────┐
                             ▼          S25          │   F_STSC ← 1     │
                    < F_STSD = 1 ? > ─YES──          └──────────────────┘
                             │ NO                             │    S33
                             ▼          S26          ┌──────────────────┐
   NO ◄──────────< F_STSC = 1 ? >                    │   TM2 ← TEXE     │
                             │ YES                   └──────────────────┘
                             ▼          S27
                    < TM2 ≦ 0 ? > ──NO──────►
                             │ YES
                             ▼          S28                       S34
              ┌──────────────────┐          ┌──────────────────┐
              │   F_STSC ← 0     │          │   CALCULATE K    │
              └──────────────────┘          └──────────────────┘
                             │                        │
                             ▼                        ▼          S35
   ┌──────────────────────────────┐  S29  ┌────────────────────────────────┐
   │  QINJLMT ← QINJLMTBASE        │       │ QINJLMT ← QINJLMTBASE × K     │
   └──────────────────────────────┘       └────────────────────────────────┘
                             │
                             ▼
                    ┌──────────────┐
                    │   RETURN     │
                    └──────────────┘
```

F I G. 6

SETTING OF
CORRECTION CONDITIONS

S41 CALCULATE FEX

S42 CALCULATE TSTSC

S43 CALCULATE REGR

S44 TEXE < TSTSC ?

YES → S48 TM3 ← TSTSC − TEXE → S49 F_STSD ← 1 → S50 F_STSC ← 0

NO → S45 TM2 ← TSTSC → S46 F_STSD ← 0 → S47 F_STSC ← 1

RETURN

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4135539 B

- EP 1460251 A